# EUROPÄISCHE PATENTSCHRIFT

(11) **EP 3 119 603 B1**
(45) Veröffentlichungstag und Bekanntmachung des Hinweises auf die Patenterteilung: **19.01.2022**
(21) Anmeldenummer: 15712055.1
(22) Anmeldetag: 19.03.2015
(51) Int. Cl.: B32B 27/08, B32B 27/32, B32B 38/06

(54) **VERPACKUNGSFOLIE**
PACKAGING FILM
FEUILLE D'EMBALLAGE

(30) Priorität: 21.03.2014 DE 102014004042; 21.03.2014 DE 102014010691; 29.07.2014 DE 102014010986
(43) Veröffentlichungstag der Anmeldung: 25.01.2017
(73) Patentinhaber: Loparex Germany GmbH & Co. KG, 91301 Forchheim (DE)
(72) Erfinder: SEBALD, Ingrid, 91207 Lauf an der Pegnitz (DE); SCHMIDT, WERNER, 91301 Forchheim (DE); GRIMM, FELIX, 91052 Erlangen (DE)
(74) Vertreter: Kutzenberger Wolff & Partner
(86) Internationale Anmeldenummer: PCT/EP2015/000610
(87) Internationale Veröffentlichungsnummer: WO 2015/139843

(56) Entgegenhaltungen:
- EP-A1- 2 471 859
- WO-A1-2011/054434

## Beschreibung

Die vorliegende Erfindung betrifft eine Verpackungsfolie umfassend eine mindestens monoaxial gereckte, mehrschichtige, flexible Kunststofffolie mit einer Gesamtdicke ≤ 18 µm, vorzugsweise ≤ 12 µm, die eine Dehnung von bis zu höchstens 1% bei einer Zugkraft von wenigstens 3 N pro 25 mm Breite gemäß DIN EN ISO 527-3 aufweist, und daraus hergestellte Verpackungen für vorzugsweise einzeln verpackte Hygieneprodukte oder einzeln verpackte Inkontinenzprodukte.

Es ist bekannt, dass Kunststofffolien für viele Anwendungen gebraucht werden, wobei der Einsatz von Kunststofffolien als Verpackungsmaterial einen beträchtlichen Anteil des Verbrauchs ausmacht. So ist auch insbesondere im Hygienebereich ein steigender Trend zum Verpacken von Hygiene-Artikeln für den Einmalgebrauch erkennbar,da solche Hygieneartikel wie Slipeinlagen oder Damenbinden, aber auch Inkontinenzartikel in zunehmendem Maße einzeln verpackt werden. Damit steigt auch dafür der Bedarf an entsprechendem Verpackungsmaterial zunehmend. Da solches Verpackungsmaterial kaum recyclebar ist und damit keiner Wiederverwendung zugeführt werden kann, wird im verstärkten Maße versucht, auch für diese Verpackungsmaterialien möglichst wenig fossile Ressourcen in Anspruch zu nehmen. Dies bedeutet, dass für die Herstellung entsprechender Kunststofffolien als Verpackungsmaterial so wenig wie möglich der aus fossilen Rohstoffen gewonnenen Polymeren verwendet werden sollen, ohne dass aber bei den unverzichtbaren Qualitätsanforderungen an solche Kunststofffolien, insbesondere an deren mechanische Eigenschaften, deren Barriereeigenschaften und an andere notwendige, physikalische Eigenschaften Abstriche gemacht werden müssen.

Um bei der Herstellung von Kunststofffolien Polymer-Material einzusparen, ist es zunächst naheliegend, die Gesamtschichtdicke einer solchen mehrschichtigen Kunststofffolie zu verringern. Da damit aber üblicherweise eine zum Teil drastische Verminderung der mechanischen Eigenschaften, wie der Zugspannung, der Weiterreißfestigkeit und gegebenenfalls der Durchstoßfestigkeit einer solchen Kunststofffolie verbunden ist, wird die Handhabung während der Weiterverarbeitung der Kunststofffolie zum Endprodukt beeinträchtigt, wodurch auch Produktionsstörungen auftreten können. Damit ist eine solche Möglichkeit zur Materialeinsparung mit nicht unerheblichen Risiken verbunden. Zusätzlich können auch bei einer Release-Ausrüstung von Kunststofffolien mit einer Gesamtschichtdicke von ≤ 20 µm Schwierigkeiten auftreten.

Dabei beschreibt die WO 2011/054434 A1 ein klebefähiges Produkt mit einer entfernbaren Trennfolie umfassend wenigstens eine Schicht (a), die aus Polyolefinen bestehen kann, die auf wenigstens einer ihrer Oberflächen eine Ausrüstung basierend auf wenigstens einer lipophilen Verbindung aufweist und die eine Prägestruktur wenigstens dort hat, wo die entfernbare Trennfolie mit der klebrigen Oberfläche des Produktes in Kontakt steht. Weiterhin beschreibt die EP 2 471 859 A1 eine ein- oder mehrschichtige Dehnfolie mit einer Dicke von 8 - 30 µm umfassend eine zentrale Schicht X enthaltend ein statistischen Propylen-Ethylen-Copolymer und ein Polypropylen basiertes Harz, wobei auf dieser Schicht X auf beiden Seiten eine weitere Schicht Y aus einem im wesentlichen Polyethylen basierten Polymer aufgebracht sein kann.

Aufgabe der vorliegenden Erfindung war es daher, eine Verpackungsfolie basierend auf einer flexiblen Kunststofffolie zur Verfügung zu stellen, die trotz einer Reduzierung der Gesamtschichtdicke der Kunststofffolie auf unter 20 µm ausgezeichnete mechanische Eigenschaften aufweist und eine weitestgehend störungsfreie Verarbeitung gewährleistet.

Diese Aufgabe wird durch das Zurverfügungstellen einer Verpackungsfolie gemäß Anspruch 1, die eine mindestens monoaxial in Maschinenrichtung gereckte, mehrschichtige Kunststofffolie mit mindestens fünfschichtigem Aufbau und mit einer Gesamtdicke von ≤ 18 µm, vorzugsweise ≤ 12 µm, insbesondere von 5 µm bis ≤ 12 µm, umfasst und die eine Dehnung von bis zu höchstens 1% bei einer Zugkraft von wenigstens 3 N, vorzugsweise 3 N bis zu 5 N pro 25 mm Breite gemäß DIN ISO 527-3 aufweist und die nicht geprägt ist und keine Prägestruktur aufweist, gelöst.

Vorzugsweise besteht die erfindungsgemäße Verpackungsfolie nur aus der fünfschichtigen Kunststofffolie gemäß Anspruch 1 mit einer Gesamtdicke von ≤ 18 µm, vorzugsweise ≤ 12 µm, insbesondere von 5 µm bis ≤ 12 µm, die sich dadurch auszeichnet, dass sie eine mindestens monoaxiale Reckung in Maschinenrichtung von mindestens 1:2, vorzugsweise von mindestens 1:3, besonders bevorzugt von 1:3 bis 1:5 und eine Dehnung von bis zu höchstens 1% bei einer Zugkraft von wenigsten 3 N, vorzugsweise 3 N bis zu 5 N pro 25 mm Breite gemäß DIN ISO 527-3 aufweist.

Gegebenenfalls kann die erfindungsgemäße Kunststofffolie auch biaxial gereckt sein, d. h. auch eine Reckung quer zur Maschinenrichtung von 1:2 bis 1:3,5 aufweisen. Bei einer biaxialen Reckung, d.h. einer Reckung sowohl in Maschinenrichtung als auch quer zur Maschinenrichtung kann das Reckverhältnis in diese beiden Richtungen unterschiedlich sein, wobei vorzugsweise die Reckung in Maschinenrichtung höher ist als quer zur Maschinenrichtung.

Die erfindungsgemäß zum Einsatz kommende Kunststofffolie ist mindestens fünfschichtig. In weiteren bevorzugten Ausführungsformen kann die Kunststofffolie 7 bis 11 Schichten aufweisen.

Die erfindungsgemäß zum Einsatz kommende, mehrschichtige Kunststofffolie mindestens einen fünfschichtigen Aufbau aus den Polymerschichten:
(a) eine gegebenenfalls siegelbare Schicht (a) als Außenschicht,
(b) eine Haftvermittlerschicht (b),
(c) eine Schicht (c), gegebenenfalls mit Barrierewirkung,
(d) eine Haftvermittlerschicht (d) und
(e) eine gegebenenfalls siegelbare Schicht (e) als Außenschicht.

Die erfindungsgemäße, als Verpackungsfolie zum Einsatz kommende Kunststofffolie besteht aus zumindest 50 Gew.-%, besonders bevorzugt aus zumindest 70 Gew.-% Polyolefinen, bevorzugt aus C₂-C₈-Olefinpolymeren, besonders bevorzugt aus C₂-C₃-Olefinpolymeren, deren Mischungen oder Copolymeren und weist die vorstehend aufgeführten Merkmale, wie Dicke, Reckung und Dehnung auf.

Vorzugsweise umfasst die erfindungsgemäße Kunststofffolie keine cyclischen Olefin-Polymeren oder Copolymeren.

Dabei basiert die Schicht (a) der erfindungsgemäßen Kunststofffolie vorzugsweise und die Schicht (e) der erfindungsgemäßen Kunststofffolie zwingend jeweils, gleich oder verschieden, auf Polyolefine und Olefin-Copolymere von α,β-ungesättigten Olefinen mit 2-3 Kohlenstoffatomen, die bevorzugt ausgewählt sind aus der Gruppe umfassend Polyethylene (PE), vorzugsweise Polyethylene niedriger Dichte zwischen 0,86 und 0,93 g/cm³ (LDPE), lineare Polyethylene niedriger Dichte zwischen 0,86 und 0,94 g/cm³ (LLDPE), die neben Ethylen als Comonomer ein oder mehrere α-Olefine mit mehr als 2 Kohlenstoffatomen enthalten, Polyethylene mittlerer Dichte zwischen 0,926 und 0,94 g/cm³ (MDPE), Polyethylene hoher Dichte zwischen 0,94 und 0,97 g/cm³ (HDPE), oder Ethylen-Copolymere mit einem α-Olefin mit 4 oder mehr Kohlenstoffatomen (mPE); Polypropylene (PP), oder Ethylen-Propylen-Copolymere mit vorzugsweise 1-10 mol.-% Ethylen (EPC). Besonders bevorzugt kann eine Mischung aus LDPE und MDPE oder eine Mischung aus LDPE, MDPE und PP zur Herstellung der Schichten (a), (e) und ggf. (c) verwendet werden, wobei der Anteil des MDPE und gegebenenfalls PP in der Mischung jeweils 25 Gew.-% bis 85 Gew.-%, bezogen auf das Gesamtgewicht der jeweiligen Schicht, betragen kann.

Erfindungsgemäß kann die Schicht (c) auf wenigstens einem Polyester oder wenigstens einem Copolyester basieren, der bevorzugt ausgewählt ist aus der Gruppe umfassend Polyethylenterephthalate (PET, c-PET, a-PET) und Copolymeren wie CoPET, PBT und CoPBT). Mit "PET" werden Polyethylenterephthalate bezeichnet, die durch Polykondensation von Ethylenglykol und Terephthalsäure hergestellt wurden. Ferner können amorphe PET (a-PET) und kristalline PET (c-PET) eingesetzt werden. Mit "CoPET" werden Copolyester bezeichnet, die neben Ethylenglykol und Terephthalsäure noch weitere Monomere, wie z.B. verzweigte oder aromatische Diole enthalten können. Mit "CoPBT" werden Polybutylenterephthalate bezeichnet. Bevorzugt weist der zum Einsatz kommende Polyester oder Copolyester eine intrinsische Viskosität von vorzugsweise 0,1 bis 2,0 dl/g, bevorzugter von 0,3 bis 1,5 dl/g, insbesondere von 0,6 bis 1,0 dl/g auf, wobei die Methoden zur Bestimmung der intrinsischen Viskosität dem Fachmann bekannt sind. Eine ausführliche Beschreibung von geeigneten PET und PBT ist im Kunststoffhandbuch Band 3/1 - technische Thermoplaste: Polycarbonate, Polyacetale, Polyester, Celluloseester; Carl Hanser Verlag, 1992, offenbart.

In einer weiteren Ausführungsform weist die erfindungsgemäß als Verpackungsfolie zum Einsatz kommende Kunststofffolie wenigstens eine Schicht (c) mit einer Barrierewirkung auf. Dem Fachmann sind geeignete Polymere bekannt, mit denen eine Barrierewirkung, insbesondere gegen Gas- oder Aromaverlust, gegen Migration von niedermolekularen Anteilen und/oder gegen Geschmacks- bzw.

Geruchsbeeinträchtigung, oder gegen Feuchtigkeit und/oder gegen Öle und Fette erreicht werden kann.

Dementsprechend basiert die Schicht (c) mit einer Barrierewirkung gegen Gase, bevorzugt gegen O₂, H₂0-Dampf und/oder gasförmige Aromastoffe, gegen Migration von niedermolekularen, organischen Verbindungen und/oder gegen Geschmacks- bzw. Geruchsbeeinträchtigung auf wenigstens einem thermoplastischen Polymeren ausgewählt aus der Gruppe umfassend Ethylen-Vinylalkohol-Copolymere, Polyvinylalkohole und Polyether-Polyamid-Block-Copolymere. Ethylen-Vinylalkohol-Copolymere sind besonders bevorzugt.

Gemäß einer weiteren Ausführungsform wird mit der Schicht (c) eine Barrierewirkung gegen Feuchtigkeit und/oder Ölen und Fetten erreicht, die vorzugsweise auf einem thermoplastischen, aliphatischen oder (teil-) aromatischen Polyamid oder Copolyamid oder deren Mischungen beruht.

Als Polyamide (PA) oder Copolyamide (CoPA) können zur Herstellung wenigstens einer Schicht (c) bevorzugt aliphatische oder (teil-)aromatische Polyamide, vorzugsweise mit einem Schmelzpunkt im Bereich von 160 bis 240°C, bevorzugter von 170 bis 220°C eingesetzt werden. Bevorzugt sind aliphatische Polyamide, wobei wenigstens ein Polyamid oder Copolyamid ausgewählt aus der Gruppe umfassend PA 6, PA 12, PA 6,6, PA 6,12, PA 6/6,6, PA 6,6/6, oder teilaromatische Polyamide wie PA6T und PA6l eingesetzt wurde, die vorzugsweise auch Isophorondiamin-Einheiten aufweisen können. Eine ausführliche Beschreibung von Polyamiden und Copolyamiden findet sich im Kunststoff-Handbuch Band VI, Polyamide, Carl Hanser Verlag München, 1966; und Melvin I. Kohan, Nylon Plastics Handbook, Carl Hanser Verlag München, 1995.

Wie bereits erwähnt können insbesondere zur Herstellung der Schicht (c) Homo- und/oder Copolyamide ausgewählt aus der Gruppe umfassend thermoplastische, aliphatische, teilaromatische und aromatische Homo- oder Copolyamide mit Isophorondiamin-Einheiten eingesetzt werden. Diese Homo- oder Copolyamide mit Isophorondiamin-Einheiten können aus weiteren aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen oder aromatischen Dicarbonsäuren mit 6-14 Kohlenstoffatomen wie z.B. Adipinsäure neben Terephthalsäure und/oder Isophthalsäure aufgebaut sein. Weiterhin können auch Polyamide mit Isophorondiamin-Einheiten, die unter Mitverwendung von Lactamen mit 4-10 Kohlenstoffatomen wie z.B. ε-Caprolactam hergestellt wurden, eingesetzt werden. Zur Herstellung der Schicht (c) können vorzugsweise Homo- und/oder Copolyamide mit Isophorondiamin-Einheiten verwendet werden, wobei, Copolyamide aus ε-Caprolactam, Isophorondiamin und einer aromatischen Dicarbonsäure, vorzugsweise Isophthalsäure, besonders bevorzugt eingesetzt werden.

In einer bevorzugten Ausführungsform beträgt der Anteil der Isophorondiamin-Isophathalsäure-Einheiten in der Polyamid-Komponente der Schicht (c) wenigstens 1 bis 10 Gew.-%, besonders bevorzugt 2 bis 6 Gew.-%, bezogen auf das Gesamtgewicht der Polyamid-Komponente.

Weiterhin können erfindungsgemäß auch die zuvor bereits aufgeführten thermoplastischen Polyester zur Herstellung der Schicht (c) verwendet werden.

Mit Hilfe der Schicht (c) als Barriereschicht kann unter entsprechender Auswahl von geeigneten Polymeren die erfindungsgemäße, mehrschichtige Kunststofffolie eine gegenüber einer entsprechenden Kunststofffolie ohne Barriereschicht deutlich verringerte Sauerstoffdurchlässigkeit gemäß DIN 53380-3 aufweisen, die höchstens bis zu 10,00 cm³/(m²·d·bar) bei 23°C und 50% r. F. betragen kann. Dabei kann die Sauerstoffdurchlässigkeit der erfindungsgemäß zum Einsatz kommenden, mehrschichtigen Kunststofffolie noch weiter bis auf höchstens 8 cm³/(m²·d·bar), bevorzugt höchstens 7 oder 6 cm³/(m²·d·bar), bevorzugter höchstens 5, 4 oder 3 cm³/(m²·d·bar), noch bevorzugter höchstens 2, 1 oder 0,5 cm³/(m²·d·bar), am bevorzugtesten höchstens 0,4, 0,3 oder 0,2 cm³/(m²·d·bar) und insbesondere höchstens 0,1, 0,09 oder 0,08 cm³/(m²·d·bar) (jeweils bei 23°C und 50% r. F.) reduziert werden.

Mit Hilfe der Schicht (c) als Barriereschicht kann ebenfalls unter entsprechender Auswahl von geeigneten Polymeren die Wasserdampfdurchlässigkeit der erfindungsgemäß zum Einsatz kommenden, mehrschichtigen Kunststofffolie bis auf die vorstehend genannten Werte für die Sauerstoffdurchlässigkeit reduziert werden, wobei die Wasserdampfdurchlässigkeit gemäß DIN ISO 53 122 bestimmt wird.

Sofern die Schicht (c) als Barriereschicht (c) fungiert, ist sie vorzugsweise über Haftvermittlerschichten (b) und (d) mit den daran angrenzenden Schichten verbunden.

Geeignete thermoplastische Polymere, die als Haftvermittlermaterialien eingesetzt werden können, sind dem Fachmann bekannt. Bevorzugt basieren die Haftvermittlerschichten (b) und (d), gleich oder verschieden, auf einem vorzugsweise modifizierten Polyolefin und/oder Olefin-Copolymeren, vorzugsweise ausgewählt aus der Gruppe umfassend mit Carboxylgruppen oder cyclischen Anhydridgruppen modifizierte Polyethylene, Polypropylene, insbesondere mit Maleinsäureanhydrid-Gruppen modifizierte Polyethylene, Polypropylene und Ethylen-VinylacetatCopolymere. Bevorzugt sind Maleinsäureanhydrid-modifizierte PE, mit COOH-Gruppen modifizierte PE, mit Carboxylgruppen modifizierte Copolymere von Ethylenvinylacetat, oder von Ethylen(meth)acrylat oder anhydridmodifizierte EthylenVinylacetat-Copolymere und ein Polymerblend enthaltend mindestens zwei der vorstehend genannten Polymere. Mit Maleinsäureanhydrid modifizierte Copolymere sind besonders bevorzugt.

In einer bevorzugten Ausführungsform besteht die erfindungsgemäße Verpackungsfolie aus einer Kunststofffolie mit einem wenigstens fünfschichtigen Aufbau aus
(a) einer Schicht (a), basierend auf einer Mischung aus MDPE oder LLDPE und LDPE und gegebenenfalls weiteren Füll- und Hilfsstoffen,
(b) einer Haftvermittlerschicht (b),
(c) einer Barriereschicht (c), basierend auf einem Polyamid, vorzugsweise aliphaten Polyamid, oder Copolyamid, vorzugsweise einem (teil)aromatischen Copolyamid,
(d) einer weiteren Haftvermittlerschicht (d), und
(e) eine weitere Schicht (e), basierend auf einer Mischung aus MDPE und LDPE oder LLDPE und LDPE.

In einer weiteren besonders bevorzugten Ausführungsform umfasst die erfindungsgemäße, als Verpackungsfolie zum Einsatz kommende, mehrschichtige Kunststofffolie mehr als eine Schicht (c) gemäß der folgenden Schichtenfolge:
(a) eine ggf. heißsiegelbare, ggf. mehrlagige Schicht (a) vorzugsweise aufgebaut aus wenigstens einem thermoplastischen C₂ bis C₃ Olefin-Homo- oder Copolymeren oder deren Mischungen, die ggf. mit einer Release-Schicht als Außenschicht ausgestaltet sein kann,
(b) eine Haftvermittlerschicht (b),
(c) eine Schicht (c) vorzugsweise aufgebaut aus wenigstens einem Homo- und/oder Copolyamid,
(b) ggf. eine weitere Haftvermittlerschicht (b),
(c) eine weitere Schicht (c) vorzugsweise aufgebaut aus wenigstens einem Homo- und/oder Copolyamid, oder Ethylenvinylalkohol-Copolymeren,
(d) eine weitere Haftvermittlerschicht (d),
(e) eine ggf. heißsiegelbare Außenschicht (e) aufgebaut aus wenigstens einem thermoplastischen C₂ bis C₃ Olefin-Homo- oder Copolymeren oder deren Mischungen.

Die Schichten (c) basieren auf Homopolymeren, Copolymeren oder Mischungen von Polymeren wie vorstehend beschrieben, besonders bevorzugt auf Polyamiden oder Ethylenvinylalkohol-Copolymeren. Auch die übrigen Schichten entsprechen in ihrem Aufbau den vorstehend gemachten Angaben zu diesen Schichten.

Die Schichten der erfindungsgemäß zum Einsatz kommenden, mehrschichtigen Kunststofffolie können jeweils dieselben oder unterschiedliche Additive ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Silane, Abstandshalter, Füllstoffe, wie CaCO3, Silikate, Peel-Additive, Siegel-Additive, Wachse, Benetzungsmittel, oberflächenaktive Verbindungen, vorzugsweise Tenside, und Dispergiermittel aufweisen.

Die Schichten der erfindungsgemäß zum Einsatz kommenden Kunststofffolie können wenigstens 0,01-30 Gew.-%, vorzugsweise wenigstens 0,1-20 Gew.-%, jeweils bezogen auf das Gesamtgewicht einer einzelnen Schicht wenigstens eines der vorstehend genannten Additive enthalten.

Die erfindungsgemäße Kunststofffolie bzw. Verpackungsfolie ist nicht geprägt und weist keine Prägestruktur auf ihren Oberflächen-Schichten auf.

Die gereckte, erfindungsgemäße Kunststofffolie bzw. Verpackungsfolie weist darüber hinaus eine ausgezeichnete Zugfestigkeit, ein gutes bis sehr gutes Weiterreißverhalten sowie eine ausgezeichnete Durchstoßfestigkeit auf, wobei eine Dehnung von bis zu höchstens 1 % bei einer Zugkraft von wenigstens 3 N pro 25 mm Breite, vorzugsweise von 3 N bis zu 5 N pro 25 mm Breite gemäß DIN EN ISO 527-3 auftritt.

Dadurch gelingt es, die erfindungsgemäße Verpackungsfolie trotz geringer Gesamtschichtdicke unter den üblichen hohen Abzugsgeschwindigkeiten auf Verpackungsmaschinen ohne nennenswerte Dehnung zu verarbeiten.

Darüber hinaus weisen die in Maschinenrichtung monoaxial gereckten, ungeprägten, erfindungsgemäßen Verpackungsfolien mit einem zumindest fünfschichtigen Aufbau umfassend eine Barriereschicht, insbesondere aus einem der genannten teilaromatischen Copolyamide, überraschenderweise eine bis zum 50 % höhere Weiterreißfestigkeit (nach DIN 53356 - Schenkel) in Maschinenrichtung als quer zur Maschinenrichtung auf, wodurch deren Weiterverarbeitung durch eine Rissbildung in Maschinenrichtung weit geringer ist und es dadurch zu weit weniger Ausschuß und Produktionsstörungen kommt.

Die erfindungsgemäß als Verpackungsfolie zum Einsatz kommende, mehrschichtige Kunststofffolie kann zur Verbesserung ihrer Trennwirkung auch eine Releasebeschichtung auf einer ihrer Außenschichten aufweisen.

Vorzugsweise basiert die Releasebeschichtung auf einer ausgehärteten Polysiloxan-Beschichtung, mit der die erfindungsgemäß zum Einsatz kommende, mehrschichtige Kunststofffolie bereits vor dem Recken oder nach dem Recken ausgerüstet werden kann. Die Trennwirkung erzeugende Releasebeschichtung liegt im Wesentlichen vollflächig, vorzugsweise bis auf wenigstens einen in Maschinenrichtung verlaufenden Streifen oder teilflächig, vorzugsweise als rapportgenauer Querstreifen vor.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten -[Si(R₂)-O]-, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert die ausgehärtete Polysiloxan-Beschichtung auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist die erfindungsgemäße Polysiloxan-Beschichtung eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die ausgehärtete Polysiloxan-Beschichtung der erfindungsgemäßen Kunststofffolie basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte und/oder kationisch vernetzte Polysiloxane.

Besonders bevorzugt basiert die Polysiloxan-Beschichtung auf wenigstens einem ausgehärteten Polysiloxan, das durch thermische Aushärtung und/oder unter Einwirkung von UV-Strahlung, ausgehärtet wurde. Bevorzugt basiert die Polysiloxan-Beschichtung auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind. Thermisch ausgehärtete Polysiloxane können durch thermische Hydrosilylierung von Silan-Funktionen aufweisenden Polysiloxanen mit einer zumindest eine Kohlenstoff-Doppelbindung aufweisenden Verbindung erhalten werden. Die UV-Aushärtung erfolgt vorzugsweise nach dem Recken der erfindungsgemäß zum Einsatz kommenden Folie. Ebenso wird die thermische Aushärtung bevorzugt nach dem Recken der erfindungsgemäßen Verpackungsfolie durchgeführt. Eine UV-Aushärtung ist erfindungsgemäß bevorzugt.

Prinzipiell kann die Herstellung der erfindungsgemäß als Verpackungsfolie zum Einsatz kommende Kunststofffolie nach beliebigen bekannten Herstellungsverfahren wie z.B. durch Extrusion oder durch Co-Extrusion erfolgen.

Dabei können sowohl einzelne als auch sämtliche Schichten der Kunststofffolie durch Extrusion, insbesondere durch Blasfolien-Extrusion und/oder Flachfolien-Extrusion (Cast-Extrusion), oder vorzugsweise Co-Extrusion, insbesondere Blasfolien-Co-Extrusion und/oder Flachfolien-Co-Extrusion (Cast-Co-Extrusion) gebildet werden, wobei letzteres bevorzugt ist. Dabei ist zu beachten, dass im Fall einer Dotierung der Schicht (a) oder weiteren Schichten mit Additiven, diese durch Abmischen, ggf. als Masterbatch, mit der oder den Polymer-Komponente(n) der jeweiligen Schicht zur Verarbeitung eingesetzt werden. Dieses Abmischen kann in Granulat/Pulver- oder Granulat/Granulat-Form trocken erfolgen. Es ist aber auch möglich, das Additiv dem oder den aufgeschmolzenen Polymer-Komponente(n) der jeweiligen Schicht zuzugeben, vorzugsweise durch Zudosierung in einem für die Extrusion der jeweiligen Schicht verwendeten Extruder.

Nach dem an sich bekannten Coextrusionsverfahren werden die den einzelnen Schichten der erfindungsgemäß als Verpackungsfolie zum Einsatz kommende Folie entsprechenden Schmelzen gleichzeitig und gemeinsam durch eine Runddüse oder eine Flachdüse coextrudiert, die so erhaltene Folie zur Verfestigung auf einer oder mehreren Walze(n) abgezogen und die gereckte Folie thermofixiert.

Eine biaxiale Reckung (Orientierung) kann sequentiell oder simultan durchgeführt werden. Die seqentielle Reckung wird im Allgemeinen aufeinanderfolgend durchgeführt, wobei die aufeinanderfolgende biaxiale Reckung, bei der zuerst längs (in Maschinenrichtung) und quer (senkrecht zur Maschinenrichtung) gereckt wird, bevorzugt ist. Bei einer Folienherstellung nach einer Flachfolienextrusion mit anschließender monoaxialen oder biaxialen Reckung werden das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Folie wird auf einer oder mehreren Abzugswalzen bei einer Temperatur von 10 bis 100 °C, vorzugsweise 10 bis 50 °C, abgezogen, wobei sie abkühlt und sich verfestigt.

Die erfindungsgemäß zum Einsatz kommende, mehrschichtige Kunststofffolie wird dann entweder nur längs oder längs und quer zur Extrusionsrichtung gereckt, was zu einer Orientierung der Molekülketten führt. Das Längsrecken wird vorzugsweise bei einer Temperatur von 70 bis 130 °C, vorzugsweise 80 bis 110 °C, zweckmäßigerweise mit Hilfe zweier entsprechend dem angestrebten Reckverhältnis verschieden schnelllaufender Walzen und das gegebenenfalls zusätzliche Querrecken vorzugsweise bei einer Temperatur von 120 bis 180 °C mit Hilfe einen entsprechenden Kluppenrahmens durchgeführt. Dabei kann man die gewünschten Querreckverhältnisse einstellen. Eine Reckung nur in Maschinenrichtung ist erfindungsgemäß bevorzugt.

An die Reckung der erfindungsgemäß zum Einsatz kommende Folie schließt sich vorzugsweise ihre Thermofixierung (Wärmebehandlung) an, wobei die Folie etwa 0,1 bis 10 s lang bei einer Temperatur von 100 bis 160 °C gehalten wird. Anschließend kann die erfindungsgemäße Folie gegebenenfalls nach Zwischenlagerung mit einer gegebenenfalls vorhandenen Releasebeschichtung ausgerüstet werden. Es ist auch möglich, die extrudierte, mehrschichtige, erfindungsgemäß zum Einsatz kommende Kunststofffolie mit der gegebenenfalls vorhandenen Releasebeschichtung bereits vor dem Recken zu versehen.

Die erfindungsgemäß zum Einsatz kommende Kunststofffolie bzw. Verpackungsfolie ist ungeprägt. Die Verpackungsfolie besteht vorzugsweise aus der vorstehend beschriebenen, mindestens monoaxial gereckten, mehrschichtigen Kunststofffolie. Diese Kunststofffolien können ggf. mit weiteren Kunststofffolien und/oder Papierbahnen verbunden sein. Vorzugsweise bestehen die Verpackungsfolien nur aus den vorstehend beschriebenen Kunststofffolien. Die erfindungsgemäßen Verpackungsfolien können vorzugsweise bedruckt sein.

Ein weiterer Gegenstand der vorliegenden Erfindung ist eine Verpackung aus einer erfindungsgemäßen Verpackungsfolie, vorzugsweise einer erfindungsgemäß als Verpackungsfolie zum Einsatz kommenden Kunststofffolie, vorzugsweise für klebefähige Artikel jeder Art, besonders bevorzugt für selbstklebefähige Artikel jeder Art, besonders bevorzugt für einzeln verpackte, klebefähige Artikel, insbesondere für einen Einmalgebrauch.

Ein weiterer Gegenstand der vorliegenden Erfindung ist eine Verpackung aus der erfindungsgemäßen Verpackungsfolie, vorzugsweise einer erfindungsgemäß als Verpackungsfolie zum Einsatz kommenden Kunststofffolie, für ggf. selbstklebefähige Hygieneartikel, vorzugsweise für einzeln verpackte, ggf. gefaltete, und/oder ggf. selbstklebefähige Slipeinlagen, Damenbinden oder Inkontinenzartikel, insbesondere für einen einmaligen Gebrauch.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe

**Tabelle I**

| | **Dichte** | **MFR (°C/ kg)** |
|---|---|---|
| LDPE | 0,923 | 0,75 (190 °C/2.16 kg) |
| LLDPE | 0,921 | 0,9 (190 °C/2.16 kg) |
| MDPE | 0,935 | 1,4 (190 °C/2.16 kg) |
| PP | 0,90 | 0,95 (230 °C/2.16 kg) |
| Copolyamid aus Isophorondiamin / Isophthalsäure/ ε-Caprolactam mit ca 5 mol% Isophorondiamin (IPDI-Copolyamid) | 1,13 | 5 (235 °C/2.16 kg) |
| HV = PE mit MSA modifiziert | 0,91 | 2,6 (190 °C/2.16 kg) |
| Kreide | | Masterbatch aus LDPE mit 70 Gew.-% CaCO₃ |
| Farbstoff | | Masterbatch aus LDPE mit 70 Gew.-% TiO₂ |

### II. Herstellung der erfindungsgemäß zum Einsatz kommenden Kunstofffolien (B1/B2)

Jede der mehrschichtigen Kunststofffolien mit den in der Tabelle II bzw. Tabelle III angegebenen Zusammensetzungen bzw. angegebenen Aufbau wurde durch Coextrusion auf eine Blasfolien-coextrusionsanlage zunächst mit einer Gesamtschichtdicke von 40 µm hergestellt. Nach Breitlegung des Folienschlauchs wurde dieser einer Walzenreckanlage zugeführt und um den Faktor 1:4 in Längsrichtung gereckt, so dass die sich daraus resultierende Gesamtfoliendicke von 10 µm ergab. Von diesen mehrschichtigen Kunststofffolien wurden die in der nachfolgenden Tabelle IV angegebenen, physikalischen Eigenschaften nach DIN EN ISO 527-3 bestimmt und angegeben.

### III. Aufbau der Kunststofffolien

Alle nachfolgenden %-Angaben sind jeweils Gew.-%.

### III.1 Beispiele B1 (nicht erfindungsgemäß)

### (3-schichtig, Gesamtschichtdicke 10 µm)

**Tabelle III Tabelle II**

| **Schichtaufbau** | **Rohstoffe B1** |
|---|---|
| Schicht (a) | 30% MDPE |
| Schichtdicke 2,5 µm | 49,5% LDPE |
| | 20% Kreide |
| | 0,5% Additiv |
| Schicht (c) | 48,4% MDPE |
| Schichtdicke 5 µm | 33,3% PP |
| | 13,3% LDPE |
| | 4% Farbstoff |
| | 1% Additiv |
| Schicht (e) | 30% MDPE |
| Schichtdicke 2,5 µm | 49,5% LDPE |
| | 20% Kreide |
| | 0,5% Additiv |
| ungeprägt | + |
| monoaxial gereckt | + |

### III.2 Beispiele B2

### (5-schichtig, Gesamtschichtdicke 10 µm)

**Tabelle III Tabelle II**

| **Schichtaufbau** | **Rohstoffe B2** |
|---|---|
| Schicht (a) | 54% MDPE |
| Schichtdicke 2,9 µm | 20% LDPE |
| | 15% Kreide |
| | 10% Farbstoff |
| | 1% Additiv |
| Haftvermittlerschicht (b) Schichtdicke 0,85 µm | 100% HV |
| Schicht (c) | 100 % |
| Schichtdicke 2,5 µm | IPDI-Copolyamid |
| Haftvermittlerschicht (d) Schichtdicke 0,85 µm | 100% HV |
| Schicht (e) | 54% MDPE |
| Schichtdicke 2,9 µm | 20% LDPE |
| | 15% Kreide |
| | 10% Farbstoff |
| | 1% Additiv |
| ungeprägt | + |
| monoaxial gereckt | + |

**Tabelle IV: Messungen nach DIN EN ISO 527-3 (Streifenbreite 25mm)**

**Beispiel 1 (3-schichtig, ungeprägt, monoaxial gereckt))**

| **Reckverhältnis** | **Dicke [µm]** | **Reißkraft [N]** | | **Reißfestigkeit [N/mm²)** | | **Zugkraft [N]** | **Dehnung [%]** |
|---|---|---|---|---|---|---|---|
| **MD** | | **MD** | **CD** | **MD** | **CD** | **MD** | **MD** |
| 1:3,8 | =11 | 39,2 | 5,8 | 142,5 | 21,1 | 3,9 | 1 |
| | | | | | | 3 | 0,67 |

**Beispiel 2 (5-schichtig, ungeprägt, monoaxial gereckt)**

| **Reckverhältnis** | **Dicke [µm]** | **Reißkraft [N]** | | **Reißfestigkeit [N/mm²]** | | **Zugkraft [N]** | **Dehnung [%]** |
|---|---|---|---|---|---|---|---|
| **MD** | | **MD** | **CD** | **MD** | **CD** | **MD** | **MD** |
| 1:4 | 10 | 45,2 | 4,1 | 180,1 | 35,2 | 4,6 | 1 |
| | | | | | | 3 | 0,52 |

## Patentansprüche

1. Eine Verpackungsfolie aus einer mindestens monoaxial in Maschinenrichtung zu mindestens 1:2 gereckten, nicht geprägten, keine Prägestruktur aufweisenden Kunststofffolie aus zumindest 50 Gew.% C₂ bis C₃-Olefinpolymeren, deren Mischungen oder deren Copolymeren umfassend einen mindestens fünfschichtigen Aufbau aus
(a) einer gegebenenfalls siegelbaren Schicht (a), vorzugsweise basierend auf Polyolefinen und Olefin-Copolymeren von α,β-ungesättigten Olefinen mit 2-3 Kohlenstoffatomen als Außenschicht,
(b) einer Haftvermittlerschicht (b),
(c) einer Schicht (c), basierend auf einer Mischung aus LDPE und MDPE oder einer Mischung aus LDPE, MDPE und PP oder mit Barrierewirkung basierend auf Ethylen/Vinylalkohol-Copolymeren, Polyvinylalkoholen, Polyamiden, Copolyamiden, Polyestern und/oder Polyether-Polyamid-Block-Copolymeren,
(d) einer Haftvermittlerschicht (d) und
(e) einer gegebenenfalls siegelbaren Schicht (e) basierend auf Polyolefinen und Olefin-Copolymeren von α,β-ungesättigten Olefinen mit 2-3 Kohlenstoffatomen als Außenschicht
mit einer Gesamtdicke ≤ 18 µm, vorzugsweise ≤ 12 µm und einer Dehnung von bis zu höchstens 1% bei einer Zugkraft von wenigstens 3N pro 25 mm Breite gemäß DIN EN ISO 527-3.

2. Eine Verpackungsfolie nach Anspruch 1, **dadurch gekennzeichnet, dass** die Kunststofffolie in Maschinenrichtung eine Reckung von mindestens 1:3 aufweist.

3. Eine Verpackungsfolie nach Anspruch 1 oder 2, **dadurch gekennzeichnet, dass** die Kunststofffolie zu mindestens 70 Gew.-% aus C₂ bis C₃-Olefinpolymeren, deren Mischungen oder deren Copolymeren besteht.

4. Eine Verpackungsfolie nach einem der vorangegangenen Ansprüche, **dadurch gekennzeichnet, dass** die Kunststofffolie als Polyolefine, Polyethylene (PE), vorzugsweise LDPE, MDPE, LLDPE, Polypropylene (PP) oder eine Mischung aus wenigstens zwei der genannten Polyolefine, vorzugsweise eine Mischung aus LDPE und MDPE oder eine Mischung aus LDPE, MDPE und PP, aufweist.

5. Eine Verpackungsfolie nach einem der vorangegangenen Ansprüche, **dadurch gekennzeichnet, dass** die Schicht c) der Kunststofffolie als Barriereschicht eine Barriereschicht gegen Gase, besonders bevorzugt gegen O₂, H₂O-Dampf und/oder gasförmige Aromastoffe, gegen Fette und Öle oder gegen Migration von niedermolekularen, organischen Verbindungen und/oder gegen Feuchtigkeit aufweist.

6. Eine Verpackungsfolie nach einem der vorangegangenen Ansprüche, **dadurch gekennzeichnet, dass** die Kunststofffolie wenigstens einen fünfschichtigen Aufbau aus
(a) einer gegebenenfalls siegelbaren Schicht (a), basierend auf einer Mischung aus MDPE oder LLDPE und LDPE und gegebenenfalls weiteren Füll- und Hilfsstoffen, als Außenschicht
(b) einer Haftvermittlerschicht (b),
(c) einer Barriereschicht (c), basierend auf einem (teil)aromatischen Copolyamid,
(d) einer weiteren Haftvermittlerschicht (d), und
(e) einer weiteren, gegebenenfalls siegelbaren Schicht (e), basierend auf einer Mischung aus MDPE oder LLDPE und LDPE als Außenschicht aufweist.

7. Eine Verpackungsfolie nach Anspruch 6, **dadurch gekennzeichnet, dass** die Barriereschicht (c) der Kunststofffolie aus einem Copolyamid aus ε-Caprolactam, Isophorondiamin/Isophtalsäure-Einheiten aufgebaut ist.

8. Eine Verpackungsfolie nach Anspruch 7, **dadurch gekennzeichnet, dass** die nicht geprägte, in Maschinenrichtung gereckte Kunststofffolie eine höhere Weiterreißfestigkeit in Maschinenrichtung als quer zur Maschinenrichtung aufweist.

9. Eine Verpackungsfolie nach einem der vorangegangenen Ansprüche, **dadurch gekennzeichnet, dass** die Kunststofffolie eine Releasebeschichtung, vorzugsweise aus ausgehärtetem Polysiloxan, auf wenigstens einer ihrer Oberflächen aufweist.

10. Eine Verpackung hergestellt aus einer Verpackungsfolie nach einem der vorangegangenen Ansprüche.

11. Eine Verpackung nach Anspruch 10 für Hygieneartikel, vorzugsweise für einzeln verpackte Slipeinlagen, Damenbinden oder Inkontinenzartikel.

12. Eine Verpackung nach Anspruch 11 für einzeln verpackte, klebefähige Artikel, vorzugsweise für selbstklebefähige Artikel für einen Einmalgebrauch.

13. Eine Verpackung nach Anspruch 12 für selbstklebefähige Hygieneartikel oder Inkontinenzartikel.

## Claims

1. Packaging film comprising a polymeric film oriented at least 1:2 at least monoaxially in machine direction which is not embossed and has no embossed structure and which is composed of at least 50 wt% of C₂-C₃ olefin polymers, their mixtures or their copolymers, comprising an at least five-layer construction composed of
(a) an optionally sealable layer (a), preferably based on polyolefins and olefin copolymers of α,β-unsaturated olefins having 2-3 carbon atoms as outer layer,
(b)an adhesion promoter layer (b),
(c)a layer (c) based on a mixture of LDPE and MDPE or a mixture of LDPE, MDPE and PP or with barrier effect based on ethylene/vinyl alcohol copolymers, polyvinyl alcohols, polyamides, copolyamides, polyesters and/or polyether-polyamide block copolymers,
(d)an adhesion promoter layer (d), and
(e)an optionally sealable layer (e) based on polyolefins and olefin copolymers of α,β-unsaturated olefins having 2-3 carbon atoms as outer layer,
having a total thickness ≤ 18 µm, preferably ≤ 12 µm and an elongation of up to at most 1% under a tensile force of at least 3 N per 25 mm width in accordance with DIN EN ISO 527-3.

2. Packaging film according to Claim 1, **characterized in that** the polymeric film in machine direction has a draw ratio of at least 1:3.

3. Packaging film according to Claim 1 or 2, **characterized in that** the polymeric film consists to an extent of at least 70 wt% of C₂-C₃ olefin polymers, their mixtures or their copolymers.

4. Packaging film according to any of the preceding claims, **characterized in that** the polymeric film has as polyolefins polyethylene (PE), preferably LDPE, MDPE, LLDPE, polypropylenes (PP), or a mixture of at least two of said polyolefins, preferably a mixture of LDPE and MDPE or a mixture of LDPE, MDPE and PP.

5. Packaging film according to any of the preceding claims, **characterized in that** the layer c) of the polymeric film has as a barrier layer a barrier layer against gases, more preferably against O₂, H₂O vapor and/or gaseous flavors, against fats and oils or against migration of low molecular mass organic compounds and/or against moisture.

6. Packaging film according to any of the preceding claims, **characterized in that** the polymeric film has at least a five-layer construction composed of
(a) an optionally sealable layer (a) as outer layer, based on a mixture of MDPE or LLDPE and LDPE und optionally further fillers and auxiliaries,
(b) an adhesion promoter layer (b),
(c) a barrier layer (c) based on a (partially) aromatic copolyamide,
(d) another adhesion promoter layer (d), and
(e) another optionally sealable layer (e) as outer layer, based on a mixture of MDPE or LLDPE and LDPE.

7. Packaging film according to Claim 6, **characterized in that** the barrier layer (c) of the polymeric film is made up of a copolyamide of ε-caprolactam, isophoronediamine/isophthalic acid units.

8. Packaging film according to Claim 7, **characterized in that** the unembossed polymeric film oriented in machine direction has a higher tear strength in machine direction than transversely to the machine direction.

9. Packaging film according to any of the preceding claims, **characterized in that** the polymeric film has a release coating, preferably composed of cured polysiloxane, on at least one of its surfaces.

10. Packaging produced from a packaging film according to any of the preceding claims.

11. Packaging according to Claim 10 for hygiene articles, preferably for individually packaged panty liners, sanitary towels or incontinence articles.

12. Packaging according to Claim 11 for individually packaged adhesive articles, preferably for self-adhesive articles for single use.

13. Packaging according to Claim 12 for self-adhesive hygiene articles or incontinence articles.

## Revendications

1. Feuille d'emballage composée d'une feuille de plastique étirée d'au moins 1 : 2 de manière au moins monoaxiale dans le sens machine, non gaufrée, ne présentant aucune structure de gaufrage, composée d'au moins 50 % en poids de polymères d'oléfine en C₂ à C₃, de leurs mélanges ou de leurs copolymères comprenant une construction au moins à cinq couches composée
(a) d'une couche (a) éventuellement scellable, de préférence à base de polyoléfines et de copolymères d'oléfines d'oléfines α,β-insaturées comportant 2 à 3 atomes de carbone en tant que couche externe,
(b) d'une couche adhésive (b),
(c) d'une couche (c) à base d'un mélange de LDPE et de MDPE ou d'un mélange de LDPE, de MDPE et de PP ou comportant un effet barrière basé sur des copolymères d'éthylène/alcool vinylique, des poly(alcools vinyliques), des polyamides, des copolyamides, des polyesters et/ou des copolymères à blocs de polyéther-polyamide,
(d) d'une couche adhésive (d) et
(e) d'une couche (e) éventuellement scellable à base de polyoléfines et de copolymères d'oléfines d'oléfines α,β-insaturées comportant 2 à 3 atomes de carbone en tant que couche externe
dotée d'une épaisseur totale ≤ 18 µm, de préférence ≤ 12 µm et d'un étirement d'au plus 1 % à une force de traction d'au moins 3 N par 25 mm de largeur selon la norme DIN EN ISO 527-3.

2. Feuille d'emballage selon la revendication 1, **caractérisée en ce que** la feuille de plastique présente un étirage dans le sens machine d'au moins 1 : 3.

3. Feuille d'emballage selon la revendication 1 ou 2, **caractérisée en ce que** la feuille de plastique est constituée d'au moins 70 % en poids de polymères d'oléfine en C₂ à C₃, de leurs mélanges ou de leurs copolymères.

4. Feuille d'emballage selon l'une quelconque des revendications précédentes, **caractérisée en ce que** la feuille de plastique comprend, en tant que polyoléfines, des polyéthylènes (PE), de préférence LDPE, MDPE, LLDPE, des polypropylènes (PP) ou un mélange d'au moins deux des polyoléfines mentionnées, de préférence un mélange de LDPE et de MDPE ou un mélange de LDPE, de MDPE et de PP.

5. Feuille d'emballage selon l'une quelconque des revendications précédentes, **caractérisée en ce que** la couche c) de la feuille de plastique présente, en tant que couche barrière, une couche barrière contre des gaz, particulièrement préférablement contre O₂, la vapeur d'H₂O et/ou des substances aromatisantes gazeuses, contre des graisses et des huiles ou contre la migration de composés organiques à bas poids moléculaire et/ou contre l'humidité.

6. Feuille d'emballage selon l'une quelconque des revendications précédentes, **caractérisée en ce que** la feuille de plastique comprend au moins une construction à cinq couches composée
(a) d'une couche (a) éventuellement scellable, à base d'un mélange de MDPE ou LLDPE et de LDPE et éventuellement d'autres matières de charge et matières auxiliaires, en tant que couche externe
(b) d'une couche adhésive (b),
(c) d'une couche barrière (c) à base d'un copolyamide (partiellement) aromatique,
(d) d'une couche adhésive supplémentaire (d), et
(e) d'une couche (e) éventuellement scellable, supplémentaire, à base d'un mélange de MDPE ou LLDPE et de LDPE en tant que couche externe.

7. Feuille d'emballage selon la revendication 6, **caractérisée en ce que** la couche barrière (c) de la feuille de plastique est construite à partir d'un copolyamide composé de motifs d'ε-caprolactame, d'isophoronediamine/acide isophtalique.

8. Feuille d'emballage selon la revendication 7, **caractérisée en ce que** la feuille de plastique non gaufrée, étirée dans le sens machine présente une résistance à la déchirure dans le sens machine plus élevée que dans le sens transversal au sens machine.

9. Feuille d'emballage selon l'une quelconque des revendications précédentes, **caractérisée en ce que** la feuille de plastique présente un revêtement détachable, de préférence composé de polysiloxane durci, sur au moins l'une de ses surfaces.

10. Emballage fabriqué à partir d'une feuille d'emballage selon l'une quelconque des revendications précédentes.

11. Emballage selon la revendication 10 pour des articles hygiéniques, de préférence pour des protège-slips, des serviettes hygiéniques ou des articles pour incontinence emballé(e)s individuellement.

12. Emballage selon la revendication 11 pour des articles collants, emballés individuellement, de préférence pour des articles autocollants jetables.

13. Emballage selon la revendication 12 pour des articles hygiéniques autocollants ou des articles pour incontinence.
